Europäisches Patentamt

European Patent Office

Office européen des brevets

(11) Publication number: **0 066 929**
**B1**

(12) **EUROPEAN PATENT SPECIFICATION**

(45) Date of publication of patent specification: **09.04.86**

(21) Application number: **82200661.5**

(22) Date of filing: **28.05.82**

(51) Int. Cl.⁴: **F 16 H 3/10** // B62M11/06

(54) **Change-speed driving gear.**

(30) Priority: **02.06.81 NL 8102669**

(43) Date of publication of application:
**15.12.82 Bulletin 82/50**

(45) Publication of the grant of the patent:
**09.04.86 Bulletin 86/15**

(84) Designated Contracting States:
**AT BE CH DE FR GB IT LI LU NL SE**

(56) References cited:
**CH-A- 235 692
CH-A- 235 693
CH-A- 241 132
CH-A- 253 158
DE-C- 654 881
FR-A- 723 730**

(73) Proprietor: **Herico B.V.
No. 6, Monumentenweg
NL-6997 AH Hoog Keppel (NL)**

(72) Inventor: **Vos, Piet
No. 10, Savorin Lohmanlaan
NL-3843 VB Harderwijk (NL)**

(74) Representative: **'t Jong, Bastiaan Jacobus et al
OCTROOIBUREAU ARNOLD & SIEDSMA
Sweelinckplein 1
NL-2517 GK 's-Gravenhage (NL)**

Courier Press, Leamington Spa, England.

## Description

The invention relates to a change-speed driving gear comprising a housing, an input shaft journalled in said housing, an output shaft mounted to be partly rotatable about the input shaft, an output wheel rigidly arranged on the output shaft, at least one input wheel rotatably mounted on the input shaft, a first wheel being at least continuously in driving connection with the input wheel and a second wheel axially coupled with the former and being continuously in driving connection with the output wheel, of a wheel set rotatably journalled parallel to the input shaft, coupling means for selectively coupling the input wheel or the output shaft with the input shaft and control-means for the coupling means, each of said input wheels being provided with self-contained coupling means arranged internally thereof and comprising coupling elements adapted to engage internal contact surfaces of the input wheel and the output shaft.

Such change-speed driving gears, in which the coupling means are arranged internally of the gear wheels, are used in those cases in which little axial space is available. A change-speed driving gear of this kind is known from CH—A—253 158. This known change-speed driving gear is particularly intended for use on a bicycle having a back-pedal brake hub, in which the input shaft is formed by the crank axle. The control means for the coupling means become operative, when the crank axle is caused to rotate through a small angle in the opposite sense. The maximum magnitude of said angle is determined by the amount of play of the chain and the brake hub, which can be covered before the brake hub becomes operative. The coupling elements are formed by pawls included in the crank axle and engaging inner recesses of the gear wheels. The pawls are operative on a small diameter and owing to the heavy torque exerted on the crank axle the pawls are exposed to very heavy forces. In practice it has been found that break-down of the pawls is often involved. This is particularly undesirable because in the event of rupture of a pawl the driving gear can readily get blocked. Apart from this serious drawback with respect to reliability of operation the known pinion driving gear has the disadvantage of being expensive, since the pawls can be manufactured only with difficulty and moreover, complicated recesses have to be provided in the interior of the gear wheels, which also involves expensive machining operations.

The object of the present invention is to provide a change-speed driving gear of the kind set forth in the preamble, which ensures satisfactory reliability of operation.

According to the invention this is achieved in that each internal engaging surface forms part of a cylindrical inner surface and in that each coupling element is a wedge element co-operating with a wedge surface of the input shaft, and in that the control means for the coupling means are represented by switching means extending in a space recessed in the input shaft normally preventing the wedge elements from coming into engagement, the switching means being movable in a position allowing the wedge element to come into engagement.

Wedge elements can be exposed to very heavy forces before rupture or even deformation occurs. The invention provides the additional advantage that the gear wheels need not be machined at high costs on their inner surfaces so that they can be manufactured at low cost.

Preferably the wedge elements are formed by rollers, which can be obtained on the market with a high degree of accuracy and high-quality properties of material at a very low price.

An advantageous embodiment of the change-speed driving gear in accordance with the invention is characterized in that the control-means comprise a switching shaft rotatably extending along the wedge elements, normally preventing the latter from being engaged and having a recess near each wedge element and a switching element selectively positioned by the switching shaft in rotational positions, each recess allowing the associated wedge element to engage in a given rotational position of the switching shaft.

In order to avoid slip of the input shaft in the gear wheel or the output shaft coupled herewith in the event of very heavy load, a recess is provided in accordance with the invention between every two inner contact surfaces located in an axial plane. If due to a very high load an initial slip occurs, the wedge element concerned snaps into the next-following recess so that further slipping becomes impossible.

From DE—C—654 881 coupling means for a change-speed driving gear comprising a wedge element co-operating with a wedge rotating with the input shaft are known as such. However, these coupling means axially displaceable from one gear wheel to another and are not self-contained coupling means separately mounted for each gear wheel.

The invention will now be described more fully with reference to an embodiment shown in the drawings. This embodiment is a change-speed driving gear for a bicycle mounted at the place of the crank axle in a bicycle frame, the crank axle forming the input shaft of the change-speed driving gear.

Fig. 1 is a cross-sectional view of the change-speed driving gear embodying the invention.

Fig. 2 is a perspective view, partly broken away, of important parts of the change-speed driving gear of Fig. 1.

Fig. 3 is a corresponding perspective view of a gear wheel of the driving gear.

Fig. 4 is a sectional view of the change-speed driving gear taken on the line IV—IV in Fig. 1.

Figs. 5 and 6 are schematic sectional views to illustrate the operation of the coupling means, Fig. 5 showing the position in engagement and Fig. 6 the position out of engagement.

Fig. 7 is an elevational view corresponding to Fig. 5 of an alternative embodiment.

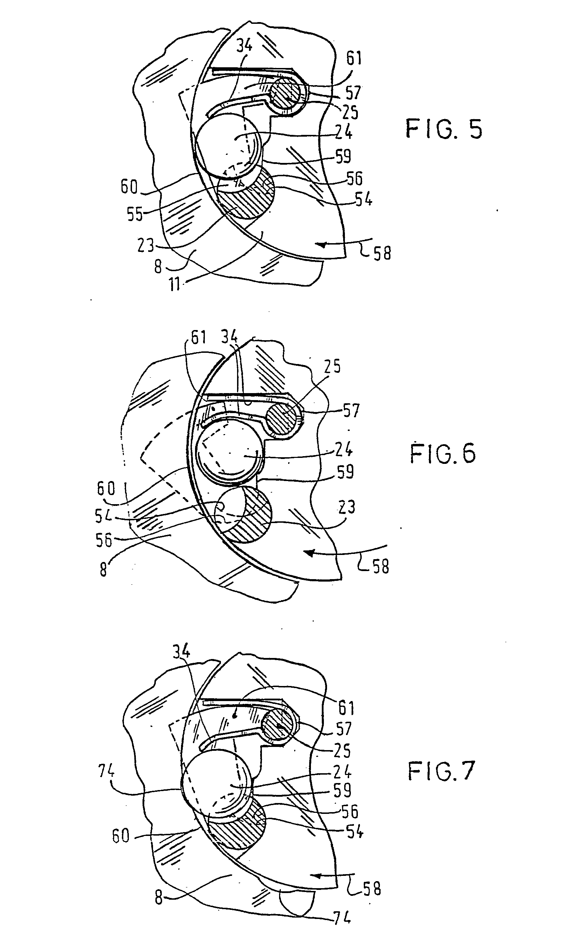

The change-speed driving gear comprises a housing 50 formed by a cylindrical housing ring 2 and two housing plates 4, 5 clamped against said ring. The housing plates 4, 5 are clamped against the housing ring 2 by means of housing bolts 37, shown in a sectional view in Fig. 4, said bolts passing across the housing plate 4 and being engaged in screwthread in the housing plate 5.

The housing plate 4 accommodates by means of a bearing 12 the input shaft 11, which also constitutes the crank axle. The output shaft 9 is mounted rotatably about the input shaft 11 in the housing plate 5 by means of a bearing 51. An output gear wheel 52 is integral with the output shaft 9. At the side of the gear wheel 52 the input shaft 11 has mounted on it a first input gear wheel 7 and a second input gear wheel 8, both of which can rotate with respect to the input shaft 11. Parallel to the input shaft 11 an auxiliary shaft 3 is mounted in the housing 50. The auxiliary shaft 3 is fixed by means of a bolt 16 in a recess in the housing plate 4. Between the head end of the auxiliary shaft 3 and the bottom of the recess a guard ring 17 is arranged for guarding the shaft 3 against loosening. On the auxiliary shaft 3 is mounted, by means of needle bearings 13, a gear wheel set 10 having three gear wheels forming a single unit and being constantly in engagement with the first input gear wheel 7, the second input gear wheel 8 and the output gear wheel 52 respectively. In the axial position the gear wheel set 10 is fixed on the auxiliary shaft 3 by means of guard rings 15, which co-operate with locking rings 14.

The input gear wheels 7 and 8 and the output shaft 9 can be selectively coupled with the input shaft 11 by means of wedge elements formed by rollers 24.

The actuation of the rollers 24 is controlled by control-means whose operation will be described more fully hereinafter.

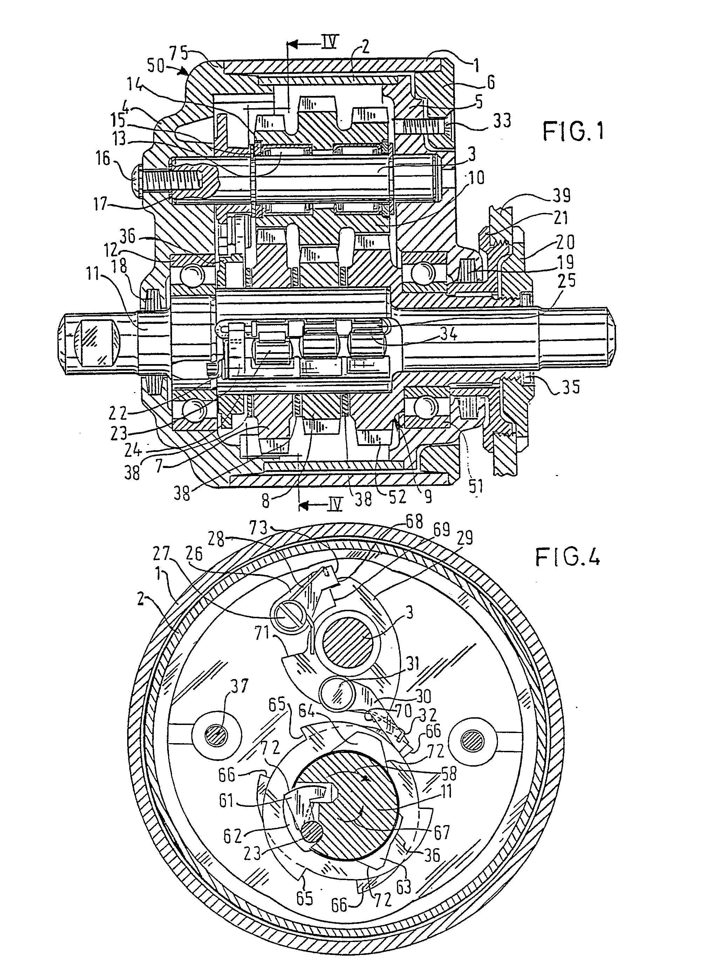

Fig. 1 furthermore shows that the output shaft 9 is provided in a rotation-resistant manner by means of key toothing with a chain wheel carrier 21. The chain wheel carrier 21 is coupled by means of left-hand screwthead with a chain wheel 39. The chain wheel 39 is clamped with the chain wheel carrier 21 to the key toothing of the shaft 9 by means of a clamping plate 20 engaging the screwthread of the output shaft 9. The chain wheel 39 can be linked in a conventional manner through a chain to a chain wheel of the rear wheel of the bicycle. By selectively coupling one of the input gear wheels 7, 8 or the output shaft 9 with the output shaft 11, various transmission ratios are obtained between the input shaft 11 and the chain wheel 39. It will be obvious that by this change-speed driving gear three different transmission ratios can be set between the input shaft 11 and the output shaft 9. When the input shaft is directly coupled with the output shaft 9 by means of the roller 24 concerned, the transmission ratio between said two shafts is 1:1. With the ratios between the diameters of the gear wheels shown in Fig. 1, the output shaft 9 is accelerated with respect to the input shaft 11 when the first input gear wheel 7 is coupled with the input shaft 11. The output shaft 9 is then driven through said first input gear wheel 7, the gear wheel set 10 and the gear wheel 52 of the output shaft 9. When, on the contrary, the second input gear wheel 8 is coupled with the input shaft 11, the rotation of the output shaft 9 is decelerated with respect to that of the input shaft 11.

Into the housing 50 can be introduced an appropriate lubricant, for example, lubricating oil. In order to avoid undesirable leakage of lubricant packing rings 18, 19 and 35 are arranged in the driving gear.

Between the axial head faces of the elements relatively rotatable on the shaft 11 are arranged spacing rings 38 of suitable material, for example, bronze or a synthetic resin. On the inner circumference said rings are provided with cams protruding towards the centre and adapted to snap into the recess 57 in the shaft 11 intended for the coupling means. Thus the rollers 24 are prevented from axially shifting in place, whilst at the same time the switching shaft 23 is held in place.

The operation of the coupling means will be apparent from Figs. 5 and 6. These Figures are schematic cross-sectional views of the input shaft 11 at the area of the second input gear wheel 8. The coupling elements formed by the rollers 24 are accommodated in a recess 57 of the input shaft 11. This recess 57 has a surface 59, which together with the opposite inner surface 60 of the gear wheel 8 constitutes a wedge-shaped space. The roller 24 can be brought into contact both with said wedge surfaces 59 and with the inner surface 60 of the gear wheel 8. In the normal driving direction of the input shaft 11 (see arrow 58) the wedge element 24 will have a wedge effect between the wedge surface 59 and the inner surface 60 of the gear wheel 8 so that this gear wheel 8 is coupled with the input shaft 11. This situation is illustrated in Fig. 5.

The roller 24 can become operative since the switching shaft 23 is provided near said roller with a recess 55, which leaves the roller 24 concerned free in the rotational position of the switching shaft 23 shown in Fig. 5 to be engaged by being urged by the spring element 34. In a different rotational position, i.e. the position shown in Fig. 6, the switching shaft 23 and the hook-like form of one limb of the spring element 34 prevent the roller 24 from coming into contact with the wedge surface 59 as well as the inner surface 60 of the gear wheel 8. Owing to the hook-like form on the limb of the spring 34 co-operating with the wedge element 24 and because it reaches far outwards it is ensured that, in the position shown in Fig. 6, the wedge element 24 will not come into contact with the inner surface 60. The wedge element 24 is thus prevented from getting into engagement and hence from turning the switching shaft 23 due to thrusts or vibrations.

The switching shaft 23 has three recesses 54, 55 and 56 for the coupling elements 24 associated with the first gear wheel 7, the second input gear wheel 8 and the output shaft 9 respectively. Since the recesses 54, 55 and 56 are located so that in different rotational positions of the switching shaft 23 they release the associated coupling element 24 to become engaged, the gear wheels concerned or the output shaft can be selectively coupled with the input shaft 11.

In order to permit of putting the switching shaft 23 in the desired angular position, it is provided with a control arm 61, which co-operates with a switching disc 36. The switching disc 36 is rotatably mounted around the input shaft 11 and has internally three cam recesses 62, 63 and 64. These cam recesses 62, 63 and 64 have different depths and accordingly they allow the control-arm 61 of the switching shaft 23 to turn outwardly to different extents by the spring 22 actuating said arm. In this way the three desired rotational positions of the switching shaft 23 are determined.

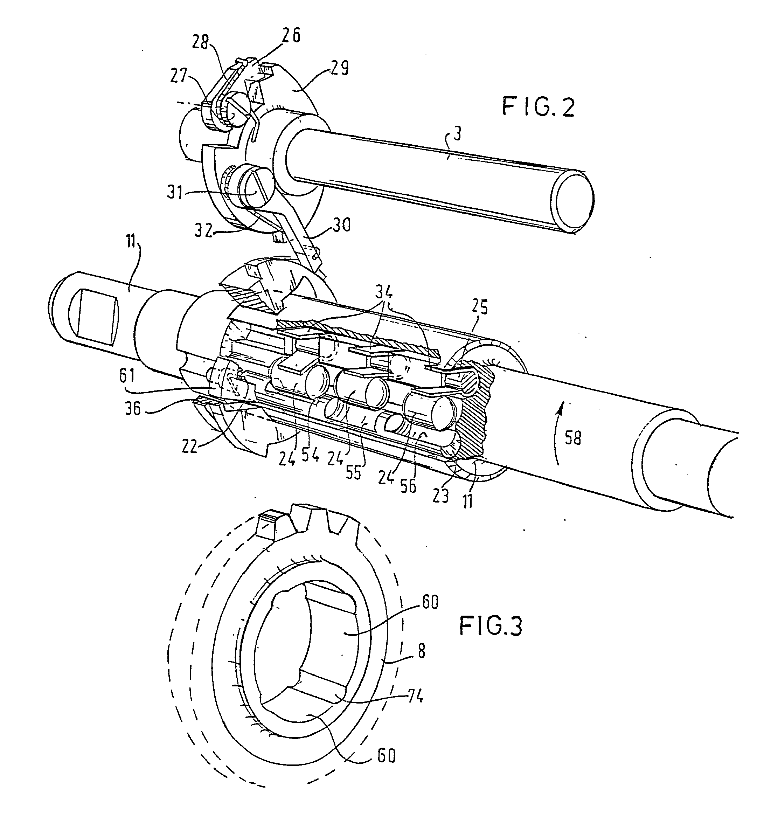

Figs. 1 and 2 furthermore show that the rollers 24 are loaded in the direction of engagement by hairpin-shaped leaf springs 34, which are fixed with the aid of a guard pin 25 in the recess 57 of the input shaft 11. Instead of using leaf springs 34 other spring elements may, of course, be employed, for example, a depressible, elastic synthetic foam.

Fig. 4 illustrates that in normal operation, in which the input shaft 11 rotates in the direction of the arrow 58, the switching disc 36 is turned along by the control-arm 61 of the switching shaft 23. If it is desired to change over to a different transmission, the switching disc 36 has to rotate with respect to the input shaft 11 so that the control-arm 61 can protrude in a different recess 63 or 64. In the embodiment shown this is achieved by causing the input shaft 11 to rotate in the opposite sense indicated by the arrow 67. Owing to friction between the shaft 11 and the switching disc 36 said disc is moved along in the direction of the arrow 67 until a cam 65 protruding from the periphery of the switching disc 36 comes into contact with a switching pawl 30 located on said surface. The switching pawl 30 is pivotable about a shaft 31 or rotatably mounted on a blocking disc 29 journalled on the secondary shaft 3. The switching pawl 30 is loaded in clockwise direction by a spring 32 engaging on the one hand the blocking disc 29 and on the other hand said pawl 30. Since the switching pawl 30 is in contact with the surface of the switching disc 36, a reactive torque produced by said spring load is exerted on the blocking disc 29 in anti-clockwise direction. The blocking disc 29 is held in the rotational position shown in Fig. 4 because a cam 68 thereof is in contact with a blocking pawl 26 connected with the housing plate 4 and being rotatable about a shaft 27. The blocking pawl 26 is loaded by a spring 28 in clockwise direction. As soon as a cam 65 of the switching disc 36 comes into contact with the switching pawl 30 and at continued rotation of the input shaft 11 in anti-clockwise direction indicated by the arrow 67, the blocking disc 29 is turned in clockwise direction by the force exerted on the switching pawl 30 until the cam 71 comes into contact with the rear side of the blocking pawl 26. The blocking pawl then snaps into the recess of the blocking disc 29. The contact of the cam 71 with the rear side of the blocking pawl 26 prevents further rotation of the blocking disc and hence a further displacement of the switching pawl 30. Consequently, the switching disc 36 is prevented from turning on so that the input shaft 11 turns in the direction of the arrow 67 with respect to the switching disc 36. This turn of the input shaft 11 is further maintained for largely one third of a revolution so that the control-arm 61 of the switching shaft 23 snaps into the next recess 63 of the switching disc 36 and the desired other transmission ratio is set. In the embodiment shown the above-described part of the switching cycle is performed through an angle of 180° of rearward rotation of the input shaft 11. The pedals are preferably mounted on the shaft 11 in a manner such that the change-over can start when the pedals are at a dead point. The change-over is then accomplished after half a rearward revolution, when the pedals are again at a dead point. A cyclist can clearly sense the dead points of the pedal strokes so that this embodiment ensures satisfactory actuation.

In order to ensure that the switching shaft 23 is in the correct rotational position and, moreover, in the correct initial position for a next change-over, the control-arm has to be in contact with a front surface, viewed in the direction of the arrow 58, of the recess 62, 63 or 64 concerned. When the input shaft 11 is again turned in the direction of the arrow 58 and the cam 65, being in contact with the switching pawl 30, gets free of said pawl, the blocking disc 29 leaps back as a result of the reactive torque exerted by the switching pawl 30 until the cam 69 is in contact with the front end 73 of the blocking pawl 26. In this position of the blocking disc 29 the cam 70 thereof protrudes into the path of cams 66 located at the periphery of the switching disc 36 and having a direction opposite that of the cams 65. When a cam 66 of the switching disc 36 comes into contact with the cam 70 of the blocking disc 29, the switching disc 36 is retained and the input shaft 11 rotates in the direction of the arrow 58 with respect to the switching disc 36 until the control-arm 61 comes into contact with a front surface 72 of a recess 62, 63, 64 respectively. As a result of the pawl effect of the control-arm 61 the input shaft 11 can then no longer turn with respect to the switching disc 36 in the direction of the arrow 58.

Since the input shaft 11 is driven further in the direction of the arrow 58, a heavier force is exerted on the blocking disc 29 by the cam 66 of the switching disc 36 being in engagement with the cam 70 of the blocking disc 29. The pawl face 73 of the blocking pawl 26 and the cam 69 of the blocking disc 29 co-operating with the former are at such an angle to the direction of length of the blocking pawl 26 that when a force is exerted perpendicularly to the face 73, a reactive torque is exerted on the blocking pawl 26 in anti-clockwise direction as viewed in Fig. 4. When the pawl 66 of the switching disc 36 exerts said heavier force on the cam 70 of the blocking disc 29, the reactive torque increases to an extent such that the force of the spring 28 and the friction between the face 73 and the cam 69 are overcome and the blocking pawl 26 is turned into the position shown in Fig. 4. Therefore, the blocking disc 29 can turn back until the cam 68 comes into contact with the blocking pawl 26 so that the cam 70 moves out of the path of the cams 66 of the switching disc 36.

The input shaft 11 can then be further driven in the direction of the arrow 58 and thus drive the output shaft 9 through the resultant gear wheel transmission. The switching pawl 30 remains in sliding contact with the outer surfaces of the switching die 36 so that at a desired change-over this pawl 30 can again come into contact with a cam 65 and the above-described switching cycle can be repeated.

Figs. 3 and 7 show that the input gear wheels and the output shaft between the cylindrical contact faces 60 may have recesses 74 that can be simply made. These recesses 74 preferably have a profile corresponding with part of the outer profile of the wedge element 24. If such a high torque is exerted on the input shaft 11 that the clamping force of the wedge element 24 is overcome, the input shaft 11 will slip with respect to the switched-on gear wheel or the engaged output shaft. In this preferred embodiment in which the gear wheels and the output shaft have recesses 74 said slip can occur only through a relative angular turn that the engaged wedge element 24 is caused to snap into a recess 74. Further slip is then no longer possible.

Although the Figures show that the three wedge elements are all controlled by the switching shaft, this is not absolutely necessary. Since the wedge elements have a free-running effect, that is to say, they have a coupling effect in only one relative direction of rotation of the parts to be coupled, the coupling element associated with the lowest speed, that is to say, the wedge element 24 associated with gear wheel 8, need not be controlled. When gear wheel 7 on the output shaft 9 is coupled with the input shaft 11, the gear wheel 8 rotates by the drive via the gear wheel set 10 more rapidly than the input shaft 11 so that the wedge element 24 thereof cannot come into engagement. Basically it is only needed to keep the coupling elements of the gear wheel 7 and the output shaft 9 out of engagement. When the coupling elements 24 both of gear wheel 7 and the output shaft 9 are kept out of engagement, the gear wheel 8 is automatically coupled. If the coupling element of the gear wheel 7 is kept out of engagement the output shaft 9 is automatically coupled with the input shaft 11. If finally not any of the coupling elements of gear wheel 7 and output shaft 9 is kept out of engagement, gear wheel 7 is automatically coupled with the input shaft 11.

When the change-speed driving gear embodying the invention is arranged in a bicycle as in the embodiment shown, the sprocket wheel 39 and hence the output shaft 9 will be driven in opposite sense from the rear wheel when the bicycle is manually driven backwards. The wedge element of the transmission then set will move along the input shaft in the direction of the arrow 67. However, the switching disc 36 is porevented from rotating by the switching pawl 30. At the resulting relative rotation of the switching disc 36 and the control-arm 61 the latter is urged into the recess of the shaft 11. The associated rotation of the switching shaft 23 is, however, counteracted by the engaging roller 24 so that there is a risk of forcing the switching shaft.

In order to avoid this effect, the switching shaft 23 is preferably constructed so that its recess provided for the wedge element 24 of the lowest transmission leaves free this wedge element in any rotational position of the switching shaft 23. When the bicycle is run backwards, this lowest transmission automatically gets into gear in accordance with the foregoing statements. The switching shaft can turn freely so that the risk of damage is excluded.

With regard to wedge elements rollers are preferred, because they are commercially available with a high degree of precision at a low price. However, other wedge elements may be used, for example, elements accomplishing a wedge effect by performing a tilting movement. By using wedge elements as coupling means the internal surfaces of the gear wheels to be coupled or of the output shaft need not be provided with recesses for pawl means or the like, which can be machined only with difficulty and at high costs.

As stated above, the embodiment of the change-speed driving gear shown in the drawings in accordance with the invention is intended for use in a bicycle. The frame of the bicycle comprises a sleeve-like holder 1, into which the driving gear can be inserted from the left, as viewed in Fig. 1. The housing plate 4 of the housing 50 has a suitable shoulder 50 matching the holder 1. On the other side of the holder 1 a mounting ring 6 is arranged with the aid of mounting bolts 33. By tightening the mounting bolts 33 the change-speed driving gear is clamped tight in the holder 1. In this way the change-speed driving gear can be simply and readily mounted as a closed unit in the bicycle frame. For guarantee purposes the housing 50 of the driving gear can be sealed.

When the change-speed driving gear is used in a bicycle the control-means described for the coupling means are, of course, quite appropriate. It is, however, also possible, as an alternative, to actuate the switching shaft 23 with the aid of a Bowden cable. Such an actuation, however, has the disadvantage of greater vulnerability. When the free-running effect of the coupling means embodying the invention is utilized and the control-means only comprise means for keeping the coupling elements out of engagement for the input gear wheel 7 and the output shaft 9, it is possible by using switching means not actuated by the return movement of the crank axle 11 to change from a lower to a higher gearing without the driving torque being removed from the input shaft.

Apart from a transmission comprising directly meshing gear wheels, sprocket wheels and chains may, of course, be employed. The construction then differs only in that the auxiliary shaft 3 has to be at a relatively larger distance from the input shaft 11 and in that the gear wheel set 10 rotates in the opposite sense.

## Claims

1. A change-speed driving gear comprising a housing (50), an input shaft (11) journalled in said housing, an output shaft (9) mounted to be partly rotatable about the input shaft, an output wheel (52) rigidly arranged on the output shaft (9), at least one input wheel (7) rotatably mounted on the input shaft, a first wheel being at least continuously in driving connection with the input wheel and a second wheel axially coupled with the former and being continuously in driving connection with the output wheel (52), of a wheel set (10) rotatably journalled parallel to the input shaft, coupling means for selectively coupling the input wheel (7) or the output shaft (9) with the input shaft (11) and control-means for the coupling means, each of said input wheels being provided with self-contained coupling means arranged internally thereof and comprising coupling elements (24) adapted to engage internal contact surfaces (60) of the input wheel and the output shaft, characterized in that each internal engaging surface (60) forms part of a cylindrical inner surface and in that each coupling element is a wedge element (24) co-operating with a wedge surface (59) of the input shaft, and in that the control means for the coupling means are represented by switching means (23, 61) extending in a space recessed in the input shaft normally preventing the wedge elements (24) from coming into engagement, the switching means being movable in a position allowing the wedge element (24) to come into engagement.

2. A driving gear as claimed in Claim 1 characterized in that the wedge element is a roller (24).

3. A driving gear as claimed in Claim 1 or 2 characterized in that a recess (74) is provided between every two internal contact surfaces (60) located in an axial plane.

4. A driving gear as claimed in any one of the preceding claims characterized in that the switching means comprise a switching shaft (23) rotatably extending along the wedge elements (24) and having a recess (54—56) near each wedge element (24), and a switching element (61) selectively positioning the switching shaft (23) in rotational positions, each recess allowing the associated wedge element to come into engagement in a given rotationl position of the switching shaft.

5. A driving gear as claimed in Claim 4 characterized in that the recess in the switching shaft for the wedge element (24) associated with the lowest transmission leaves free said wedge element (24) in any rotational position of the switching shaft (23).

6. A driving gear as claimed in Claim 4 or 5 characterized in that the switching element is a switching disc (36) which is rotatable about the input shaft (11) and which has cam recesses (62—64) on its inner circumference, said cam recesses being adapted to accommodate each a control arm (61) connected with the switching shaft (23) at a different depth and in that the switching disc (36) is provided with at least one first cam member (65) which together with a switching pawl (30) co-operating herewith can prevent the switching disc from rotating in the direction opposite the normal direction of rotation.

7. A driving gear as claimed in Claim 6 characterized in that the switching pawl (30) is mounted on a blocking member (29) provided with a blocking cam (69) and being movable between a rest position and an operative position, said blocking member (29) being moved into the operative position when the switching pawl (30) comes into engagement, the blocking cam (70) protruding into the path of movement of at least one second cam member (66) of the switching disc for preventing the switching disc from rotating in the normal direction of rotation and in that blocking means (26) are provided for temporarily keeping the blocking disc in the operative position.

8. A driving gear as claimed in Claim 7 characterized in that the blocking means comprise a spring-loaded blocking pawl (26), which has a contact surface (73) at an angle such that a force acting on the contact surface results in a reactive torque counter-acting the spring load.

9. A driving gear as claimed in any one of the preceding claims characterized in that the changeover between two transmissions is accomplished by a rotation of the input shaft through substantially half a revolution in a direction opposite the normal direction of rotation.

## Patentansprüche

1. Geschwindigkeits-Wechselgetriebe mit einem Gehäuse (50), einer im Gehäuse gelagerten Antriebswelle (11), einer Abtriebswelle (9), die so gelagert ist, daß sie teilweise um die Antriebswelle drehbar ist, mit einem Abtriebsrad (52), das starr auf der Abtriebswelle (9) sitzt, mit wenigstens einem Antriebsrad (7), das drehbar auf der Antriebswelle gelagert ist, mit einem ersten Rad, das wenigstens kontinuierlich an Antriebsverbindung mit dem Antriebsrad und einem zweiten Rad steht, welches axial mit dem ersteren gekuppelt ist und ständig in Antriebsverbindung mit dem Abtriebsrad (52) eines Radsatzes (10) steht, der drehbar parallel zur Antriebswelle gelagert ist, mit einer Kupplungseinrichtung zur selektiven Kupplung des Antriebsrades (7) oder des Abtriebsrades (9) mit der Antriebswelle (11) und mit einer Steuervorrichtung für die Kupplungseinrichtung, wobei jedes der Antriebsräder mit einer selbständigen, im Inneren angetriebenen Kupplung versehen ist, die Kupplungselemente (24) aufweist, welche an inneren Berührungsoberflächen (60) des Antriebsrades und der Abtriebswelle angreifen, dadurch gekennzeichnet, daß jede innere Berührungsoberfläche (60) einen Teil einer zylindrischen inneren Oberfläche bildet, und daß jedes Kupplungselement ein Keilelement (24) ist, welches mit einer Keiloberfläche (59) der Antriebswelle zusammenwirkt, und daß die Steuervorrichtung für die Kupplungseinrichtung durch Schaltglieder (23, 61) gebildet wird, die sich in einen Raum erstrecken, der in der Antriebswelle ausgenommen ist und normalerweise verhindern, daß die Keilelemente (24) in Eingriff gelangen, wobei die Schaltglieder in eine Stellung beweglich sind, in der das Keilelement in Eingriff gelangen kann.

2. Geschwindigkeits-Wechselgetriebe nach Anspruch 1, dadurch gekennzeichnet, daß das Keilelement eine Rolle (24) ist.

3. Geschwindigkeits-Wechselgetriebe nach den Ansprüchen 1 oder 2, dadurch gekennzeichnet, daß eine Ausnehmung (74) zwischen jeweils zwei inneren Berührungsoberflächen (60) vorgesehen ist, die in einer Axialebene liegen.

4. Geschwindigkeits-Wechselgetriebe nach einem der vorhergehenden Ansprüche, dadurch gekennzeichnet, daß die Schaltglieder eine Schaltwelle (23) aufweisen, die drehbar längs der Keilelemente (24) verläuft und eine Ausnehmung (54 bis 56) neben jedem Keilelement (24) aufweist, und daß ein Schaltglied (61) selektiv die Schaltwelle (23) in Drehstellungen positioniert, wobei jede Ausnehmung das zugeordnete Keilelement in einer gegebenen Drehstellung der Schaltwelle in Eingriff gelangen läßt.

5. Geschwindigkeits-Wechselgetriebe nach Anspruch 4, dadurch gekennzeichnet, daß die Ausnehmung in der Schaltwelle für das Keilelement (24), das der geringsten übersetzung zugeordnet ist, das Keilelement (24) in jeder Drehstellung der Schaltwelle (23) freiläßt.

6. Geschwindigkeits-Wechselgetriebe nach Anspruch 4 oder 5, dadurch gekennzeichnet, daß das Schaltglied eine Schaltscheibe (36) ist, die um die Antriebswelle (11) drehbar ist und Nockenausnehmungen (62 bis 64) auf ihrem inneren Umfang aufweist, daß die Nockenausnehmungen so ausgebildet sind, daß sie jeweils mit einem Steuerarm (61) zusammenpassen, der mit der Schaltwelle (23) in verschiedenen Tiefenstellungen verbunden ist, und daß die Schaltscheibe (36) mit wenigstens einem ersten Nockenglied (65) versehen ist, das zusammen mit einer Schaltklinke (30), die damit zusammenwirkt, die Schaltscheibe daran hindern kann, sich in Richtung entgegen der normalen Drehrichtung zu drehen.

7. Gelschwindigkeits-Wechselgetriebe nach Anspruch 6, dadurch gekennzeichnet, daß die Schaltklinke (30) auf einem Blockierungsglied (29) gelagert ist, das mit einem Blockierungsnocken (69) versehen und zwischen einer Ruhestellung und einer Betriebsstellung beweglich ist, und daß das Blockierungsglied (29) in die Betriebsstellung überführt wird, wenn die Schaltklinke (30) in Eingriff gelangt, und daß der Blockierungsnocken (70) in den Bewegungspfad wenigstens eines Sekundärnockengliedes (66) der Schaltscheibe einsteht, um zu verhindern, daß die Schaltscheibe sich in der normalen Drehrichtung dreht, und daß Blockierungsmittel (26) vorgesehen sind, um zeitweise die Blockierungsscheibe in der Betriebsstellung zu halten.

8. Geschwindigkeits-Wechselgetriebe nach Anspruch 7, dadurch gekennzeichnet, daß die Blockierungsmittel eine federbelastete Sperrklinke (26) aufweisen, welche eine Berührungsoberfläche (73) besitzt, die unter einem solchen Winkel steht, daß eine auf die Berührungsoberfläche wirkende Kraft zu einem Reaktionsdrehmoment führt, welches der Federbelastung entgegenwirkt.

9. Geschwindigkeits-Wechselgetriebe nach einem der vorhergehenden Ansprüche, dadurch gekennzeichnet, daß die Umschaltung zwischen zwei Übertragungsstufen durch eine Drehung der Antriebswelle über etwa eine halbe Umdrehung in Richtung entgegengesetzt zur normalen Drehrichtung bewirkt wird.

## Revendications

1. Mécanisme de commande de changement de vitesses, comprenant un boîtier (50), un arbre d'entrée (11) tourillonnant dans ce boîtier, un arbre de sortie (9) monté partiellement rotatif autour de l'arbre d'entrée, une roue de sortie (52) rigidement disposée sur l'arbre de sortie (9), au moins une roue d'entrée (7) montée rotative sur l'arbre d'entrée, une première roue étant au moins de manière continue un liaison d'entraînement avec la roue d'entrée et une seconde roue couplée axialement avec la précédente et étant continuellement en liaison d'entraînement avec la roue de sortie (52) d'une série de roues (10) montées rotativement autour d'un axe parallèle à l'arbre d'entrée (11), des moyens d'accouplement pour accoupler sélectivement la roue d'entrée (7) ou l'arbre de sortie (9) avec l'arbre d'entrée (11) et des moyens de commande pour les moyens d'accouplement, chacune de ces roues d'entrée étant munie de moyens d'accouplement disposés à l'intérieur de celle-ci et comprenant des éléments d'accouplement (24) adaptés pour coopérer avec des surfaces de contact internes (60) de la roue d'entrée et de l'arbre de sortie, caractérisé en ce que chaque surface interne d'engagement (60) fait partie d'une surface intérieure cylindrique et en ce que chaque élément d'accouplement est une clavette (24) coopérant avec une surface de clavette (59) de l'arbre d'entrée, et en ce que les moyens de commande des moyens d'accouplement sont constitués par des éléments interrupteurs (23, 61) s'étendant dans un évidement ménagé dans l'arbre d'entrée, empêchant normalement les clavettes (24) de venir en contact, et les éléments interrupteurs sont déplaçables dans une position qui autorise les clavettes (24) à venir en contact.

2. Mécanisme de commande selon la revendication 1, caractérisé en ce que la clavette est un galet (24).

3. Mécanisme de commande selon l'une des revendications 1 et 2, caractérisé en ce qu'un évidement (74) est ménagé entre chaque paire de surfaces de contact internes (60) situées dans un plan axial.

4. Mécanisme de commande selon l'une des revendications précédentes, caractérisé en ce que les éléments interrupteurs comprennent un arbre interrupteur (23) rotatif, s'étendant le long des clavettes (24) et présentant un évidement (54—56) au voisinage de chaque clavette (24), et un élément interrupteur (61) positionnant sélectivement l'arbre interrupteur (23) dans des positions angulaires, chaque évidement permettant à la clavette associée de venir en contact pour une position angulaire donnée de l'arbre interrupteur.

5. Mécanisme de commande selon la revendication 4, caractérisé en ce que l'évidement de l'arbre interrupteur pour la clavette (24) associée à la plus petite transmission laisse libre la clavette (24) pour une position angulaire quelconque de l'arbre interrupteur (23).

6. Mécanisme de commande selon l'une des revendications 4 et 5, caractérisé en ce que l'élément interrupteur est un disque interrupteur (36) monté rotatif autour de l'arbre d'entrée (11) et qui comporte des dégagements formant cames (62—64) sur sa circonférence intérieure, ces dégagements formant cames étant adaptés pour recevoir chacun un bras de commande (61) relié à l'arbre interrupteur (23) à une profondeur différente, et en ce que le disque interrupteur (36) est muni d'au moins un premier élément de came (65) qui, en coopération avec un cliquet interrupteur (30) peut empêcher le disque interrupteur de tourner dans la direction opposée à la direction normale de rotation.

7. Mécanisme de commande selon la revendication 6, caractérisé en ce que le cliquet interrupteur (30) est monté sur un organe de blocage (29) muni d'une came de blocage (69) et déplaçable entre une position de repos et une position active, cet organe de blocage (29) étant déplacé dans la position active lorsque le cliquet interrupteur (30) vient en contact, la came de blocage (70) faisant saillie dans le trajet du déplacement d'au moins une seconde came (66) du disque interrupteur pour empêcher le disque interrupteur de tourner dans la direction normale de rotation, et des moyens de blocage (26) sont prévus pour maintenir temporairement le disque de blocage dans la position active.

8. Mécanisme de commande selon la revendication 7, caractérisé en ce que les moyens de blocage comprennent un cliquet de blocage (26) chargé élastiquement, qui présente une surface de contact (73) disposée suivant un angle tel qu'une force agissant sur la surface de contact provoque un couple de réaction contrebalançant la charge élastique.

9. Mécanisme de commande selon l'une quelconque des revendications précédentes, caractérisé en ce que la commutation entre deux transmissions est réalisée par une rotation de l'arbre d'entrée sur sensiblement une demi-révolution dans une direction opposée à la direction normale de rotation.

FIG.1

FIG.4

0 066 929

FIG.2

FIG.3

2

FIG. 5

FIG. 6

FIG. 7